# EUROPEAN PATENT SPECIFICATION

(11) **EP 2 674 207 B1**
(45) Date of publication and mention of the grant of the patent: **15.05.2019**
(21) Application number: 13158636.4
(22) Date of filing: 11.03.2013
(51) Int. Cl.: B01D 39/16, B01D 69/12

(54) **ANTIMICROBIAL FILTER**
ANTIMIKROBIELLER FILTER
FILTRE ANTIMICROBIEN

(30) Priority: 04.04.2012 US 201213438897
(43) Date of publication of application: 18.12.2013
(73) Proprietor: Pall Corporation, Port Washington, NY 11050 (US)
(72) Inventor: HEIDENREICH, Erik, Pensacola, Florida 32503 (US); WIXWAT, Wilfrid Klaus, Pensacola, Florida 32514 (US); MORRIS, Richard, Longwood, Florida 32779 (US)
(74) Representative: Hoeger, Stellrecht & Partner Patentanwälte mbB

(56) References cited:
- EP-A1- 1 953 286
- US-A1- 2009 235 625
- US-B2- 7 700 501

## Description

### BACKGROUND OF THE INVENTION

Microorganisms such as bacteria can contaminate a variety of fluids. While membranes can be used to filter the fluids and remove the bacteria (e.g., to provide potable water), the bacteria accumulating on the surfaces of the membranes grow quickly and create biofilms, leading to fouling and blocking of the membranes.

Conventional membranes for treating microorganism-contaminated fluids have suffered from a variety of deficiencies, including the expense associated with producing such membranes.

US 2009/0235625 A1 discloses a filter including a membrane having pores with an average pore diameter in a range from, e.g., about 1 µm to about 10 µm or, e.g., from about 1 nm to about 50 nm. The membrane is air permeable. A nanoparticle precursor is dispersed throughout the pores, and the nanoparticle precursor is responsive to a stimulus to form a catalytically active nanoparticle.

The present invention provides for ameliorating at least some of the disadvantages of the prior art. These and other advantages of the present invention will be apparent from the description as set forth below.

### BRIEF SUMMARY OF THE INVENTION

The patent provides an antimicrobial porous filter as set out in claim 1.

The invention provides an antimicrobial filter comprising at least two layers: a first porous membrane including silver particles in the bulk of the membrane, disposed on a second porous membrane having a particle-capturing pore structure. The second porous membrane captures particles leached from the first porous membrane.

Preferably, at least one of the membranes comprises polysulfone, more preferably, the first and second membranes comprise polyethersulfone.

In accordance with antimicrobial filters according to the invention, at least one membrane can comprise an asymmetric membrane or comprise an isometric membrane.

In another embodiment of the invention, a method for treating a fluid, more preferably, a method for filtering a fluid, comprises passing the fluid through an embodiment of the antimicrobial filter.

### DETAILED DESCRIPTION OF THE INVENTION

In accordance with the present invention, an antimicrobial filter is provided comprising (a) a first porous membrane having an upstream surface and a downstream surface and a bulk between the upstream and downstream surfaces, the first porous membrane including particles comprising silver in the bulk, the particles having an average diameter in the range of from about 0.2 micrometers to about 20 micrometers; and (b) a second porous membrane having an upstream surface and a downstream surface and a bulk between the upstream and downstream surfaces, the second porous membrane having a mean flow pore (MFP) size less than the average diameter of the particles in the first layer; wherein the downstream surface of the first porous membrane contacts the upstream surface of the second porous membrane.

In accordance with an embodiment of the present invention, an antimicrobial filter is provided comprising (a) a first microporous sulfone membrane having an upstream surface and a downstream surface and a bulk between the upstream and downstream surfaces, the first membrane including particles comprising silver in the bulk, the particles having an average diameter in the range of from about 0.2 micrometers to about 20 micrometers; and (b) a second microporous membrane having an upstream surface and a downstream surface and a bulk between the upstream and downstream surfaces, the second membrane having a mean flow pore (MFP) size less than the average diameter of the particles in the first membrane; wherein the downstream surface of the first membrane contacts the upstream surface of the second membrane.

Typically, at least one membrane comprises a sulfone membrane, more typically, in those embodiments wherein the filter comprises at least first and second membranes, the first and second membranes each comprise a sulfone membrane, and preferably, the first and second sulfone membranes each comprise polysulfone membranes. In an even more preferred embodiment, the first and second sulfone membranes each comprise polyethersulfone membranes.

Desirably, the filter is an integral multilayer filter, i.e., the membranes are bonded together such that the filter behaves as a single structure that does not delaminate or separate under normal use conditions.

Filters comprising porous membranes according to embodiments of the invention can be used in a variety of applications, including, for example, sterile filtration applications, filtering fluids for the pharmaceutical industry, filtering fluids for medical applications (including for home and/or for patient use, e.g., intravenous applications), filtering fluids for the electronics industry, filtering fluids for the food and beverage industry, clarification, filtering antibody- and/or protein-containing fluids, and/or filtering cell culture fluids. Alternatively, or additionally, filters according to embodiments of the invention can be used to filter air and/or gas and/or can be used for venting applications (e.g., allowing air and/or gas, but not liquid, to pass therethrough). Filters according to embodiments of the inventions can be used in a variety of devices, including surgical devices and products, such as, for example, ophthalmic surgical products. Filters according to embodiments of the invention are also suitable for use with any water supply system in, for example, hospitals, public areas, hotels, and households. This can be especially desirable, as contamination of water dispensed to a person who may be vulnerable to infection can lead to, for example, debilitating and costly infections, even morbidity.

In accordance with embodiments of the invention, "antimicrobial" encompasses killing microbes ("microcidal") and inhibiting the growth and/or reproduction of microbes ("microbiostatic"). The term "microbe" includes bacteria, viruses, fungi, and protozoa.

Advantageously, filters comprising membranes can be tailored for particularly applications, e.g., the amount of silver in the fibrous medium and/or membrane can be adjusted; for example, less silver may be used for membranes treating fluid having low levels of contamination. Alternatively, or additionally, less total silver can be used in contrast to conventional membranes, as there is no need to disperse the silver throughout the thickness of the entire membrane; in accordance with the invention the silver is provided in a single membrane or fibrous layer.

The porous membrane can be made of any suitable material; preferably, the membrane comprises a polymeric medium. A variety of polymers are suitable, and suitable porous membranes can be prepared by methods known to those of ordinary skill in the art.

A variety of forms of silver can be used, including elemental silver, silver zeolite, and silver/zinc zeolite.

A variety of particle sizes are suitable for use in the invention. Typically, the particles have an average diameter of about 30 micrometers (µm) or less. In a preferred embodiment, the particles comprising silver in the first membrane layer or the fibrous medium have an average diameter in the range of from about 0.3 µm to about 20 µm, more preferably, in the range of from about 0.3 µm to about 10 µm, even more preferably, the particles comprising silver in the first membrane layer or fibrous medium have an average diameter in the range of from about 0.5 µm to about 3 µm.

The particles may comprise polyvinylpyrrolidone (PVP) in addition to silver (e.g., wherein the silver complexes with the PVP). Without being bound to any particular mechanism, it is believed that in some embodiments, the PVP complexes with the silver for better suspension in the membrane layer or the fibrous medium and/or the PVP prevents the formation of large agglomerations of silver.

A variety of silver concentrations are suitable for use in the invention, and as noted above, the amount of silver in the membrane can be tailored for an application. Illustratively, in some embodiments wherein the membrane layer comprising silver particles (e.g., elemental silver, silver zeolite, or silver/zinc zeolite) comprises a polysulfone membrane (preferably, a polyethersulfone membrane), the silver concentration is at least about 0.3% m (silver, e.g., elemental Ag, Ag zeolite, or Ag/zinc zeolite)/ m polysulfone or polyethersulfone, more typically, the silver concentration is at least about 0.8% m (elemental Ag, Ag zeolite, or Ag/zinc zeolite)/ m polysulfone or polyethersulfone. In some embodiments, the silver concentration is in the range of from about 0.5% m (elemental Ag, Ag zeolite, or Ag/zinc zeolite)/ m polysulfone or polyethersulfone to about 1% m (elemental Ag or Ag/zinc zeolite)/ m polysulfone or polyethersulfone.

The porous membranes are disposed upon one another such that the downstream surface of the first porous membrane contacts the upstream surface of the second porous membrane. The downstream surface of the first porous membrane is preferably bound to the upstream surface of the second porous membrane.

Preferably, the filter comprises at least two membranes that are cast one on the other, wherein the membranes are prepared by a phase inversion process. Typically, the phase inversion process involves casting or extruding polymer solutions into thin films, and precipitating the polymers through one or more of the following: (a) evaporation of the solvent and nonsolvent, (b) exposure to a non-solvent vapor, such as water vapor, which absorbs on the exposed surface, (c) quenching in a non-solvent liquid (e.g., a phase immersion bath containing water, and/or another non-solvent), and (d) thermally quenching a hot film so that the solubility of the polymer is suddenly greatly reduced. Phase inversion can be induced by the wet process (immersion precipitation), vapor induced phase separation (VIPS), thermally induced phase separation
(TIPS), quenching, dry-wet casting, and solvent evaporation (dry casting). Dry phase inversion differs from the wet or dry-wet procedure by the absence of immersion coagulation. In these techniques, an initially homogeneous polymer solution becomes thermodynamically unstable due to different external effects, and induces phase separation into a polymer lean phase and a polymer rich phase. The polymer rich phase forms the matrix of the membrane, and the polymer lean phase, having increased levels of solvents and non-solvents, forms the pores.

Preferably, the first solution is spread in a layer onto a support, and the second solution is spread in a layer onto the first solution, and the membrane can be later separated from the support after quenching. In some embodiments wherein the filter comprises more than two membranes, e.g., wherein a membrane comprising silver is arranged between other membranes, the solutions can be spread on each other in the desired order.

The membranes can be cast manually (e.g., poured, cast, or spread by hand onto a casting surface and quench liquid applied onto the surface) or automatically (e.g., poured or otherwise cast onto a moving bed). Examples of suitable supports include, for example, polyethylene coated paper, or polyester (such as MYLAR).

A variety of casting techniques, including dual casting techniques, are known in the art and are suitable. A variety of devices known in the art can be used for casting. Suitable devices include, for example, mechanical spreaders, that comprise spreading knives, doctor blades, or spray/pressurized systems. One example of a spreading device is an extrusion die or slot coater, comprising a casting chamber into which the casting formulation (solution comprising a polymer) can be introduced and forced out under pressure through a narrow slot. Illustratively, the first and second solutions comprising polymers can be separately cast by means of a doctor blade with knife gaps in the range from about 120 micrometers to about 500 micrometers, more typically in the range from about 180 micrometers to about 400 micrometers. The knife gaps can be different for the first and second solutions.

A variety of air gaps are suitable for use in the invention, and the air gaps can be the same for the same for the knives/doctor blades, or different. Typically, the air gaps are in the range of from about 7.62 cm (3 inches) to about 203.2 cm (80 inches).

A variety of casting speeds are suitable as is known in the art. Typically, the casting speed is at least about 61 cm per minute (2 feet per minute (fpm)), e.g., with knife air gaps of at least about 7.62 cm (3 inches).

A variety of polymers and polymer solutions are suitable for use in the invention, and are known in the art. Suitable polymer solutions can include, polymers such as, for example, polyaromatics; sulfones (e.g., polysulfones, including aromatic polysulfones such as, for example, polyethersulfone, polyether ether sulfone, bisphenol A polysulfone, polyarylsulfone, and polyphenylsulfone), polyamides, polyimides, polyvinylidene halides (including polyvinylidene fluoride (PVDF)), polyolefins, such as polypropylene and polymethylpentene, polyesters, polystyrenes, polycarbonates, polyacrylonitriles (including polyalkylacrylonitriles), cellulosic polymers (such as cellulose acetates and cellulose nitrates), fluoropolymers, and polyetherether ketone (PEEK). Polymer solutions can include a mixture of polymers, e.g., a hydrophobic polymer (e.g., a sulfone polymer) and a hydrophilic polymer (e.g., polyvinylpyrrolidone). Preferred polymers for porous fibrous media include synthetic polymeric materials, for example, polybutylene terephthalate (PBT), polyethylene, polyethylene terephthalate (PET), polypropylene, polymethylpentene, polyvinylidene fluoride, polysulfone, polyethersulfone, nylon 6, nylon 66, nylon 6T, nylon 612, nylon 11, and nylon 6 copolymers.

In addition to one or more polymers, typical polymer solutions comprise at least one solvent, and may further comprise at least one non-solvent. Suitable solvents include, for example, dimethyl formamide (DMF); N,N-dimethylacetamide (DMAC); N-methyl pyrrolidone (NMP); tetramethylurea; dioxane; diethyl succinate; dimethylsulfoxide; chloroform; and tetrachloroethane; and mixtures thereof. Suitable nonsolvents include, for example, water; various polyethylene glycols (PEGs; e.g., PEG-400, PEG-1000); polypropylene glycols, various alcohols, e.g., methanol, ethanol, isopropyl alcohol (IPA), amyl alcohols, hexanols, heptanols, and octanols; alkanes, such as hexane, propane, nitropropane, heptanes, and octane; and ketone, ethers and esters such as acetone, butyl ether, ethyl acetate, and amyl acetate; and various salts, such as calcium chloride, magnesium chloride, and lithium chloride; and mixtures thereof.

If desired, a solution comprising a polymer can further comprise, for example, one or more polymerization initiators (e.g., any one or more of peroxides, ammonium persulfate, aliphatic azo compounds (e.g., 2,2'-azobis(2-amidinopropane) dihydrochloride (V50)), and combinations thereof), and/or minor ingredients such as surfactants and/or release agents.

Suitable components of solutions and methods of preparing membranes are known in the art. Illustrative solutions comprising polymers, and illustrative solvents and nonsolvents, and methods of preparing membranes include those disclosed in, for example, U.S. Patents 4,340,579; 4,629,563; 4,900,449; 4,964,990, 5,444,097; 5,846,422; 5,906,742; 5,928,774; 6,045,899; 6,146,747; and 7,208,200.

In accordance with the invention, layers of the membrane can be formed from the same polymer and solvent, varying the viscosity, additives, and treatment, or different polymers can be used for different layers.

The porous membranes can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair pic, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or removal rating that reduces or allows the passage therethrough of one or more materials of interest as the fluid is passed through the porous media. The pore structure used depends on the size of the particles to be utilized, the composition of the fluid to be treated, and the desired effluent level of the treated fluid.

Typically, at least one membrane has a MFP size in the range in the range of from about 0.1 µm to about 1 µm. However, larger and smaller pore structures are also encompassed by embodiments of the invention.

In some embodiments, at least one membrane (e.g., downstream of a membrane comprising the silver particles) has a sterilizing grade pore structure, e.g., an MFP size of about 0.2 µm, or less. However, larger and smaller pore structures are also encompassed by embodiments of the invention. For example, in some other embodiments, at least one membrane (e.g., downstream of the porous membrane comprising the silver particles) has a MFP size of about 0.45 µm, or about 0.8 µm.

Embodiments of the invention can include at least one asymmetric membrane, at least one isometric membrane, two or more membranes of the same type of pore structure, or a combination of both asymmetric and isometric membranes.

An isometric membrane has a porous structure with a distribution characterized by a pore structure (e.g., a mean pore size) that is substantially the same through the bulk of the membrane. For example, with respect to mean pore size, an isometric membrane has a pore size distribution characterized by a mean pore size that is substantially the same through the membrane.

An asymmetric membrane has a pore structure (e.g., a mean pore size) varying throughout the bulk of the membrane. For example, the mean pore size decreases in size from one portion or surface to another portion or surface (e.g., the mean pore size decreases from the upstream portion or surface to the downstream portion or surface). However, other types of asymmetry are encompassed by embodiments of the invention, e.g., the pore size goes through a minimum pore size at a position within the thickness of the asymmetric membrane. The asymmetric membrane can have any suitable pore size gradient or ratio. This asymmetry can be measured by, for example, comparing the mean pore size on one major surface of a membrane with the mean pore size of the other major surface of the membrane.

The membrane can have any suitable thickness. In some embodiments, the thickness of the membrane comprising silver is less than the thickness of each of one or more membranes not comprising silver. For example, in some embodiments comprising a first membrane comprising silver and a second membrane not comprising silver, the thickness of the first membrane is about 50% or less than the thickness of the second membrane, or about 40% or less than the thickness of the second membrane. Typically, a membrane comprising silver has a thickness in the range of from about 1 to about 3.5 mils, and a membrane without silver has a thickness in the range of from about 2.5 to about 5.5 mils.

The membranes can have any desired critical wetting surface tension (CWST, as defined in, for example, U.S. Patent 4,925,572). The CWST can be selected as is known in the art, e.g., as additionally disclosed in, for example, U.S. Patents 5,152,905, 5,443,743, 5,472,621, and 6,074,869. For applications wherein liquid passes
through the membrane, the membrane is typically hydrophilic, having a CWST of 72 dynes/cm (72 x 10⁻⁵ N/cm) or more, more typically about 85 dynes/cm (about 85 x 10⁻⁵ N/cm) or more. However, for some other application wherein liquid does not pass through the membrane (e.g., for venting applications), the membrane can be hydrophobic, having a CWST of less than 72 dynes/cm (72 x 10⁻⁵ N/cm).

The surface characteristics of the membranes can be modified (e.g., to affect the CWST, to include a surface charge, e.g., a positive or negative charge, and/or to alter the polarity or hydrophilicity of the surface) by wet or dry oxidation, by coating or depositing a polymer on the surface, or by a grafting reaction. Modifications include, e.g., irradiation, a polar or charged monomer, coating and/or curing the surface with a charged polymer, and carrying out chemical modification to attach functional groups on the surface. Grafting reactions may be activated by exposure to an energy source such as gas plasma, vapor plasma, corona discharge, heat, a Van der Graff generator, ultraviolet light, electron beam, or to various other forms of radiation, or by surface etching or deposition using a plasma treatment.

Exemplary membranes are disclosed in U.S. Patents 4,702,840 and 4,900,449. Other membranes, including those disclosed in U.S. Patents 4,906,374; 4,886,836; 4,964,989; 5,019,260; 4,340,479; 4,855,163; 4,744,132; 4,707,266; 4,203,848; 4,618,533, 6,039,872; 6,780,327; 6,783,937; and 7,189,322, may also be suitable.

A filter according to an embodiment of the invention can include additional elements, layers, or components, that can have different structures and/or functions, e.g., at least one of prefiltration, support, drainage, spacing and cushioning. Illustratively, an embodiment of the filter can also include at least one additional element such as a mesh and/or a screen.

In accordance with embodiments of the invention, the filter can have a variety of configurations, including planar, pleated, and hollow cylindrical.

A variety of embodiments of devices (comprising an embodiment of the filter) are encompassed by the invention, including, for example, dropper bottles, dropper tips, and syringe filters, capsule filters, and cartridges.

An embodiment of the filter according to the invention is typically disposed in a housing comprising at least one inlet and at least one outlet and defining at least one fluid flow path between the inlet and the outlet, wherein the filter is across the fluid flow path, to provide a filter device. Preferably, the filter device is sterilizable. Any housing of suitable shape and providing at least one inlet and at least one outlet may be employed.

The following examples further illustrate the invention but, of course, should not be construed as in any way limiting its scope.

In the following examples, filters including two and three membranes are prepared by phase inversion, using casting solutions with and without silver particles.

With the exception of the asymmetric membrane described in Example 3, each solution includes about 65% polyethylene glycol (E400); about 1% glycerin; about 11% polyethersulfone; about 10% DMF; about 8% NMP; about 3% DI water; about 0.01% phosphoric acid; about 0.9% polyvinylpyrrolidone. The solution including silver particles includes about 0.9% elemental silver particles about 1-3 µm in diameter.

With respect to the asymmetric membrane described in Example 3, the solution includes about 59% polyethylene glycol (E400); about 1% glycerin; about 13% polyethersulfone; about 14% DMF; about 10% NMP; about 3% RO water; about 0.6% polyvinylpyrrolidone, and about 1% elemental silver particles about 1-3 µm in diameter.

To prepare the two membrane filters, a solution without silver is cast over a solution with silver. To prepare the three membrane filters, a solution without silver is cast first, followed by casting a solution with silver, followed by casting a solution without silver.

In preparing a two membrane filter, a silver particle containing solution (a first solution) is cast on a plate having a temperature of about 29 °C using a first knife having a knife gap of 10 mils. A silver particle free solution (a second solution) is continuously cast on the first solution using a second knife located about 1.27 cm to about 3.81 cm (0.5 inches to about 1.5 inches) from the first knife, the second knife having a knife gap of 22 mils.

In preparing a three membrane filter, a silver free solution (a first solution) is cast on a plate having a temperature of about 29 °C using a first knife having a knife gap of 10 mils. A silver particle containing solution (a second solution) is continuously cast on the first solution using a second knife located about 1.27 cm to about 3.81 cm (0.5 inches to about 1.5 inches) from the first knife, the second knife having a knife gap of 14 mils. Another silver free solution (a third solution, identical to the first solution) is continuously cast on the second solution using a third knife
located about 1. 27 cm to about 3.81 cm (0.5 to about 1.5 inches) from the second knife, the third knife having a knife gap of 22 mils.

The knives are pushed to cast along the plate at a speed of about 2.54 cm (1 inch) per second. Once the membranes are cast, the plate is transferred to a chamber, where the temperature is maintained at 26.7 °C at a relative humidity of 71%, with fans providing an air velocity of 152 cm/sec (5 ft/sec) for 10 minutes until the membranes form.

Water bubble point measurements of membranes indicate the isotropic membranes have a 0.2 µm MFP size, and the asymmetric membranes have a 0.8 to 0.2 µm MFP size.

Membranes are tested for antimicrobial activity against Escherichia coli (E. coli). E. coli ATCC 11229 is the challenge organism, used in inoculation volumes of 0.1 ml. Membrane samples are placed in sterilized vacuum funnels, wetted with sterile rinse solution, the appropriate volume of challenge solution is applied, and vacuum is applied. The samples are plated on growth medium, and colonies are counted.

SEM analysis shows no silver particles are present on the downstream side of the downstream membrane.

### EXAMPLE 1

This example demonstrates a two membrane filter including silver in the first membrane according to an embodiment of the invention prevents bacterial growth.

A two membrane filter is prepared as described above, wherein the upstream membrane includes silver, and both membranes are isotropic membranes. The membranes with silver (and the unchallenged controls) show little or no bacterial growth, and the challenged controls show significant bacterial growth.

### EXAMPLE 2

This example demonstrates a three membrane filter including silver in the middle membrane according to an embodiment of the invention prevents bacterial growth.

A three membrane filter is prepared as described above, wherein the middle membrane includes silver, and all three membranes are isotropic membranes. The membranes with silver (and the unchallenged controls) show little or no bacterial growth, and the challenged controls show significant bacterial growth.

### EXAMPLE 3

This example demonstrates that a two membrane filter wherein the first membrane (containing silver) is an asymmetric membrane according to an embodiment of the invention prevents bacterial growth.

A two membrane filter is prepared as described above, wherein the upstream membrane includes silver, and is an asymmetric membrane, and the downstream membrane is an isotropic membrane. The membranes with silver (and the unchallenged controls) show little or no bacterial growth, and the challenged controls show significant bacterial growth.

The use of the terms "a" and "an" and "the" and similar referents in the context of describing the invention (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

## Claims

1. An antimicrobial porous filter comprising:
(a) a first porous membrane having an upstream surface and a downstream surface and a bulk between the upstream and downstream surfaces, the first porous membrane including particles comprising silver in the bulk, the particles having an average diameter in the range of from 0.2 micrometers to 20 micrometers; and
(b) a second porous membrane having an upstream surface and a downstream surface and a bulk between the upstream and downstream surfaces, the second porous membrane having a mean flow pore (MFP) size less than the average diameter of the particles in the first layer; wherein the downstream surface of the first porous membrane contacts the upstream surface of the second porous membrane.

2. The antimicrobial filter of claim 1, wherein
(a) the first porous membrane comprises a first microporous sulfone membrane; and
(b) the second porous membrane comprises a second microporous membrane; wherein the downstream surface of the first membrane contacts the upstream surface of the second membrane, optionally wherein the first membrane has a thickness that is 50 % or less than the thickness of the second membrane.

3. The filter of claim 1 or 2, wherein the particles further comprise polyvinylpyrrolidone.

4. The filter of any one of claims 1-3, further comprising a third membrane, upstream of the first membrane.

5. The filter of any one of claims 2 to 4, wherein at least the first sulfone membrane comprises a polyethersulfone membrane.

6. The filter of any one of claims 1 to 5, wherein the second porous membrane comprises a microporous sulfone membrane.

7. The filter of any one of claims 2 to 6, wherein the polyethersulfone membrane includes a silver concentration of at least 0.3 % m silver / m polyethersulfone.

8. The filter of any one of claims 1 to 7, wherein the particles have an average diameter in the range of from 0.5 to 3 micrometers.

9. The filter of any one of claims 1 to 8, wherein at least one porous membrane comprises an asymmetric membrane.

10. The filter of any one of claims 1 to 9, wherein at least one porous membrane comprises an isotropic membrane.

11. The filter of any one of claims 2 to 10, wherein the first and second membranes each comprise an isotropic membrane and/or wherein the first membrane comprises an asymmetric membrane and the second membrane comprises an isotropic membrane.

12. The filter of any one of claims 1 to 11, wherein the first porous membrane and/or the second porous membrane has a mean pore size in the range of 0.1 to 0.5 micrometers.

13. A method of treating a fluid comprising:
passing the fluid through the filter of any one of claims 1-12.

## Patentansprüche

1. Antimikrobielles poröses Filter, umfassend:
(a) eine erste poröse Membran mit einer Aufstromoberfläche und einer Abstromoberfläche und einem Volumen zwischen der Aufstrom- und der Abstromoberfläche, wobei die erste poröse Membran Partikel umfasst, welche Silber im Volumen umfassen, wobei die Partikel einen durchschnittlichen Durchmesser im Bereich von 0,2 Mikrometer bis 20 Mikrometer aufweisen; und
(b) eine zweite poröse Membran mit einer Aufstromoberfläche und einer Abstromoberfläche und einem Volumen zwischen der Aufstrom- und der Abstromoberfläche, wobei die zweite poröse Membran eine mittlere Durchflussporen-(MFP-)größe aufweist, welche kleiner ist als der durchschnittliche Durchmesser der Partikel in der ersten Lage; wobei die Abstromoberfläche der ersten porösen Membran mit der Aufstromoberfläche der zweiten porösen Membran in Kontakt steht.

2. Antimikrobielles Filter nach Anspruch 1, wobei
(a) die erste poröse Membran eine erste mikroporöse Sulfonmembran umfasst; und wobei
(b) die zweite poröse Membran eine zweite mikroporöse Membran umfasst;
wobei die Abstromoberfläche der ersten Membran mit der Aufstromoberfläche der zweiten Membran in Kontakt steht, wobei optional die erste Membran eine Dicke aufweist, welche 50 % oder weniger der Dicke der zweiten Membran beträgt.

3. Filter nach Anspruch 1 oder 2, wobei die Partikel ferner Polyvinylpyrrolidonumfassen.

4. Filter nach einem der Ansprüche 1 bis 3, ferner umfassend eine dritte Membran stromaufwärts der ersten Membran.

5. Filter nach einem der Ansprüche 2 bis 4, wobei mindestens die erste Sulfonmembran eine Polyethersulfonmembran umfasst.

6. Filter nach einem der Ansprüche 1 bis 5, wobei die zweite poröse Membran eine mikroporöse Sulfonmembran umfasst.

7. Filter nach einem der Ansprüche 2 bis 6, wobei die Polyethersulfonmembran eine Silberkonzentration von mindestens 0,3 Masse-% Silber/Masse Polyethersulfon umfasst.

8. Filter nach einem der Ansprüche 1 bis 7, wobei die Partikel einen durchschnittlichen Durchmesser im Bereich von 0,5 bis 3 Mikrometer aufweisen.

9. Filter nach einem der Ansprüche 1 bis 8, wobei mindestens eine poröse Membran eine asymmetrische Membran umfasst.

10. Filter nach einem der Ansprüche 1 bis 9, wobei mindestens eine poröse Membran eine isotrope Membran umfasst.

11. Filter nach einem der Ansprüche 2 bis 10, wobei die erste und die zweite Membran jeweils eine isotrope Membran umfassen und/oder wobei die erste Membran eine asymmetrische Membran und die zweite Membran eine isotrope Membran umfasst.

12. Filter nach einem der Ansprüche 1 bis 11, wobei die erste poröse Membran und/oder die zweite poröse Membran eine mittlere Porengröße im Bereich von 0,1 bis 0,5 Mikrometer aufweist.

13. Verfahren zur Behandlung eines Fluids, umfassend:
Hindurchleiten des Fluids durch das Filter nach einem der Ansprüche 1 bis 12.

## Revendications

1. Filtre poreux antimicrobien comprenant :
(a) une première membrane poreuse ayant une surface amont et une surface aval et un volume entre les surfaces amont et aval, la première membrane poreuse incluant des particules comprenant de l'argent dans le volume, les particules ayant un diamètre moyen dans la plage de 0,2 micromètre à 20 micromètres ; et
(b) une seconde membrane poreuse ayant une surface amont et une surface aval et un volume entre les surfaces amont et aval, la seconde membrane poreuse ayant une taille de pore d'écoulement moyen (PEM) inférieure au diamètre moyen des particules dans la première couche ; où la surface aval de la première membrane poreuse est en contact avec la surface amont de la seconde membrane poreuse.

2. Filtre antimicrobien selon la revendication 1, où
(a) la première membrane poreuse comprend une première membrane en sulfone microporeuse ; et
(b) la seconde membrane poreuse comprend une seconde membrane microporeuse ;
où la surface aval de la première membrane est en contact avec la surface amont de la seconde membrane, éventuellement où la première membrane a une épaisseur qui est 50 % ou moins que l'épaisseur de la seconde membrane.

3. Filtre selon la revendication 1 ou 2, où les particules comprennent en outre de la polyvinylpyrrolidone.

4. Filtre selon l'une quelconque des revendications 1-3, comprenant en outre une troisième membrane, en amont de la première membrane.

5. Filtre selon l'une quelconque des revendications 2 à 4, où au moins la première membrane en sulfone comprend une membrane en polyéthersulfone.

6. Filtre selon l'une quelconque des revendications 1 à 5, où la seconde membrane poreuse comprend une membrane en sulfone microporeuse.

7. Filtre selon l'une quelconque des revendications 2 à 6, où la membrane en polyéthersulfone inclut une concentration d'argent d'au moins 0,3 % m d'argent/m de polyéthersulfone.

8. Filtre selon l'une quelconque des revendications 1 à 7, où les particules ont un diamètre moyen dans la plage de 0,5 à 3 micromètres.

9. Filtre selon l'une quelconque des revendications 1 à 8, où au moins une membrane poreuse comprend une membrane asymétrique.

10. Filtre selon l'une quelconque des revendications 1 à 9, où au moins une membrane poreuse comprend une membrane isotrope.

11. Filtre selon l'une quelconque des revendications 2 à 10, où les première et seconde membranes comprennent chacune une membrane isotrope et/ou où la première membrane comprend une membrane asymétrique et la seconde membrane comprend une membrane isotrope.

12. Filtre selon l'une quelconque des revendications 1 à 11, où la première membrane poreuse et/ou la seconde membrane poreuse a une taille de pore moyenne dans la plage de 0,1 à 0,5 micromètre.

13. Procédé de traitement d'un fluide comprenant :
le passage du fluide à travers le filtre selon l'une quelconque des revendications 1-12.
